# EUROPÄISCHE PATENTANMELDUNG

(11) **EP 2 879 122 A1**
(43) Veröffentlichungstag der Anmeldung: **03.06.2015**
(21) Anmeldenummer: 14194612.9
(22) Anmeldetag: 24.11.2014
(51) Int. Cl.: G09F 21/04, B60Q 7/00, B60Q 1/50, B60Q 1/26, G09F 7/18

(54) **Sicherheitsvorrichtung**

(30) Priorität: 25.11.2013 DE 202013105367 U
(71) Anmelder: Bergmann, Anja, 87656 Germaringen (DE); Riesner, Marita, 87656 Germaringen (DE)
(72) Erfinder: Bergmann, Anja, 87656 Germaringen (DE); Riesner, Marita, 87656 Germaringen (DE)
(74) Vertreter: Hutzelmann, Gerhard

(57) **Zusammenfassung**

Sicherheitsvorrichtung insbesondere für Fahrzeuge, wobei eine Einrichtung zum Signalisieren von Botschaften (5) an Dritte vorgesehen ist.

## Beschreibung

Die Erfindung bezieht sich auf eine Sicherheitsvorrichtung insbesondere für Fahrzeuge.

Gerade bei Pannenfahrzeugen besteht das Problem, daß andere Verkehrsteilnehmer oder allgemein Dritte nicht wissen, ob Hilfe benötigt wird, oder ob schon Hilfe unterwegs ist.

Aufgabe der Erfindung ist es daher, eine Möglichkeit zu schaffen, um andere Verkehrsteilnehmer bzw. Dritte hierüber zu informieren.

Diese Aufgabe wird erfindungsgemäß dadurch gelöst, daß eine Einrichtung zum Signalisieren von Botschaften an Dritte vorgesehen ist.

Hierdurch können Dritte informiert werden.

Dabei hat es sich als sehr vorteilhaft erwiesen, wenn wenigstens eine Tafel mit wenigstens einer Botschaft vorgesehen ist, wobei die Einrichtung mehrere vorgegebene Botschaften enthalten kann.

Damit lassen sich die notwendigen Nachrichten übermitteln, wobei auch unterschiedliche Nachrichten übermittelt werden können.

Eine weitere sehr vorteilhafte Ausgestaltung der Erfindung liegt vor, wenn ein im wesentlichen U-förmiger Körper vorgesehen ist, in dem mehrere Tafeln mit unterschiedlichen Botschaften angeordnet sind.

Hiermit lassen sich mehrere Botschaften auf einfache Art und Weise vorhalten.

Äußerst vorteilhaft ist es dabei, wenn ein Drehgelenk oder eine Schiebeführung vorgesehen ist.

Dadurch lassen sich die Botschaften durch einfaches Ausklappen um das Drehgelenk bzw. durch Herausschieben darstellen.

Ebenfalls sehr vorteilhaft ist es erfindungsgemäß, wenn die Tafeln ein- oder beidseitig mit Botschaften beschriftet sind.

Bei beidseitig beschrifteten Tafeln kann aus zweierlei Richtungen die jeweilige Botschaft wahrgenommen werden.

Äußerst vorteilhaft ist es gemäß einer weiteren Ausgestaltung der Erfindung auch, wenn die Tafeln reflektierend ausgebildet sind.

Damit lassen sich die Botschaften auch bei Dunkelheit noch gut erkennen.

Ebenfalls sehr vorteilhaft ist es, wenn die Botschaften als reflektierende oder nicht reflektierende Buchstaben auf den Tafeln angeordnet sind.

Hierdurch wird ebenfalls die Lesbarkeit bei Dämmerung bzw. Dunkelheit verbessert.

Eine weitere, äußerst vorteilhafte Weiterbildung der Erfindung liegt auch dann vor, wenn am Körper oder an den Tafeln, vorzugsweise an der Unterseite, ein oder mehrere Saugfüße angeordnet sind.

Mit derartigen Saugfüßen läßt sich die Vorrichtung beispielsweise auf einem Autodach auf einfache Art und Weise befestigen.

Ebenfalls sehr vorteilhaft ist es erfindungsgemäß, wenn am Körper oder an den Tafeln, vorzugsweise an der Unterseite, ein oder mehrere Magneten angeordnet sind.

Auch hiermit lässt sich die Vorrichtung auf einfache Art und Weise befestigen.

Weiterhin hat es sich als sehr vorteilhaft erwiesen, wenn am Körper oder an den Tafeln, vorzugsweise an der Unterseite, ein oder mehrere Standfüße angeordnet sind.

Dabei ist es äußerst vorteilhaft, wenn wenigstens ein Teil der Standfüße einklappbar oder einschwenkbar ausgebildet sind.

Hierdurch lässt sich die Vorrichtung stabil aufstellen.

Eine äußerst vorteilhafte Weiterbildung der Erfindung liegt auch vor, wenn Saugnäpfe, Magneten und Standfüße miteinander kombiniert vorgesehen sind.

Damit kann die Vorrichtung auf beliebigen Untergründen aufgestellt werden. Eine Aufstellung auf einem Autodach auch beim Abschleppen ist denkbar.

Eine sehr vorteilhafte Weiterbildung der Erfindung liegt auch dann vor, wenn wenigstens ein Teil der Tafeln auswechselbar im Körper befestigt sind.

Damit kann die Vorrichtung nach Bedarf mit unterschiedlichen Tafeln bestückt werden. Beschädigte Tafeln können ausgetauscht werden.

Ebenfalls sehr vorteilhaft ist es erfindungsgemäß, wenn eine Sperre vorgesehen ist, die ein Verlieren der Tafeln verhindert.

Hierdurch wird ein versehentliches Herausrutschen der Tafeln sicher verhindert.

Äußerst vorteilhaft ist es erfindungsgemäß auch, wenn die Breite des Körpers auf die Anzahl der aufzunehmenden Tafeln und deren Dicke abgestimmt ist.

Dadurch wird ein unerwünschtes Wacheln der Tafeln verhindert. Diese sitzen straff und stabil im Körper.

Sehr vorteilhaft ist es erfindungsgemäß auch, wenn die Tafeln hinreichend steif ausgebildet sind.

Damit wird ein unerwünschtes Umbiegen vermieden.

Eine weitere äußerst vorteilhafte Weiterbildung liegt auch darin, daß ein Halter oder eine Aufnahme vorgesehen ist, welcher die ausgeklappten bzw. ausgeschobenen Tafeln auf einem Untergrund zu befestigen vermag.

Hierdurch wird eine sehr stabile Befestigung der jeweiligen Tafel ermöglicht. Es ist dann denkbar, daß auch bei langsamer Fahrt, zum Beispiel beim Schleppen auf das Schleppen durch eine entsprechende Botschaft hinzuweisen und so Gefahrensituationen zu vermeiden.

Dabei hat es sich als sehr vorteilhaft erwiesen, wenn der Halter bzw. die Aufnahme von der Vorrichtung ausgklappbar oder ausziehbar ausgebildet ist.

Damit ist der Halter bzw. die Aufnahme immer einsatzbereit.

Gemäß einer weiteren Ausgestaltung der Erfindung ist es sehr vorteilhaft, wenn die Tafeln zumindest die Botschaften "Brauche Hilfe", "Hilfe kommt" und "Werde geschleppt" enthalten.

Dabei hat es sich auch als sehr vorteilhaft erwiesen, wenn die Tafeln zusätzlich die Botschaften "Brauche Benzin" und/oder "Brauche Diesel" enthalten.

Ebenfalls sehr vorteilhaft ist es in diesem Zusammenhang auch, wenn weitere Botschaften vorgesehen sind.

Mit diesen Botschaften sind die allermeisten Pannenfälle abgedeckt.

Im folgenden wird die Erfindung anhand eines Ausführungsbeispiels veranschaulicht.

Dabei zeigen:
- Fig. 1: eine schematische Darstellung einer erfindungsgemäßen Vorrichtung,
- Fig. 2: eine schaubildliche Ansicht der Vorrichtung,

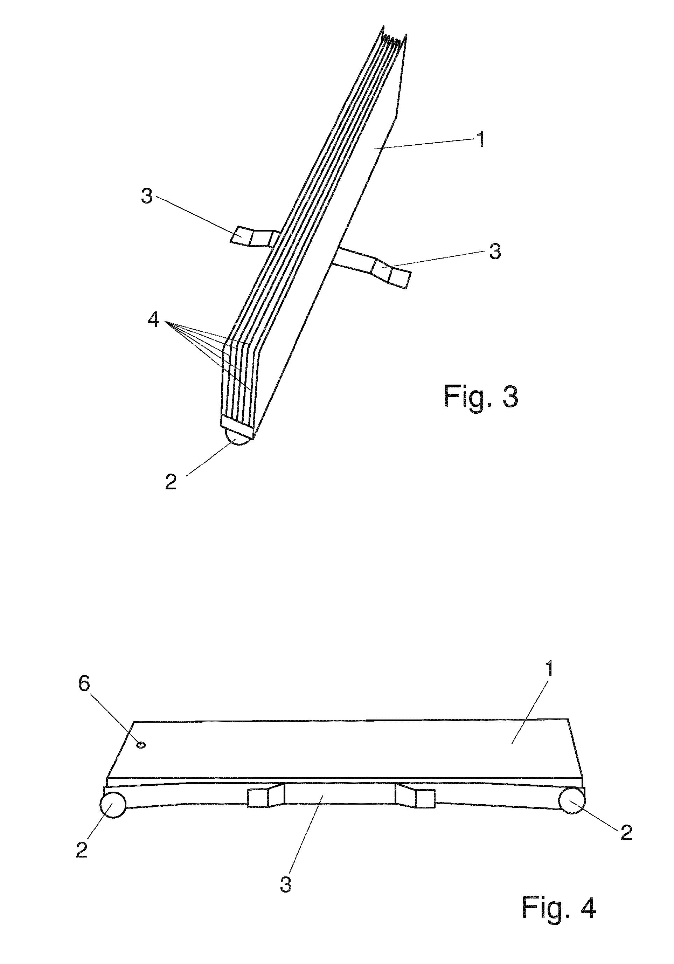

- Fig. 3: eine Ansicht der Oberseite der Vorrichtung,
- Fig. 4: eine Ansicht der Unterseite der Vorrichtung,

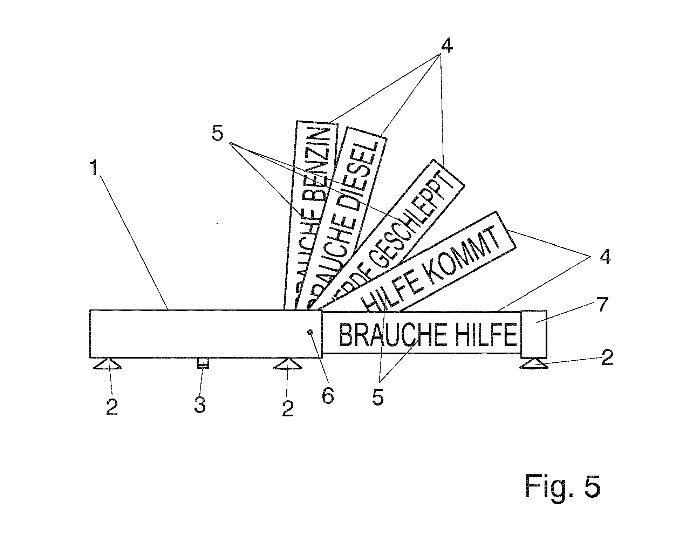

- Fig. 5: eine Ansicht der Vorrichtung mit verschiedenen aufgeklappten Botschaften.

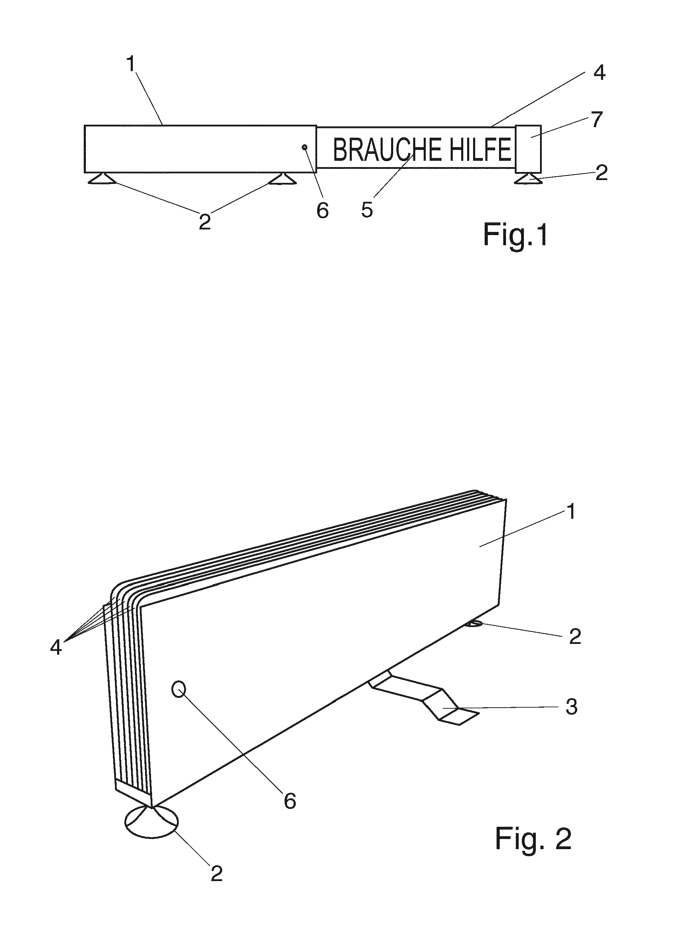

Mit 1 ist in Fig. 1 ein Körper einer Vorrichtung zum signalisieren von Botschaften bezeichnet.

Dieser Körper 1 ist im wesentlichen U-förmig ausgebildet, wobei die Öffnung des U nach oben zeigt. An der Unterseite des Körpers 1 sind jeweils im Bereich der Längsenden des Körpers 1 Saugnäpfe 2 angebracht, mit deren Hilfe der Körper 1 auf einem glatten Untergrund, zum Beispiel einem Autodach oder dergleichen befestigt werden kann. Es ist auch denkbar, daß anstatt oder in Kombination mit den Saugnäpfen 2 nicht dargestellte Magnete vorgesehen sind, mit deren Hilfe der Körper 1 ebenfalls auf entsprechenden Untergründe befestigt werden kann.

Zusätzlich kann an der Unterseite des Körpers 1 noch ein Standfuß 3 vorgesehen sein, der in diesem Ausführungsbeispiel drehbar ausgebildet ist. Für einen stabileren Stand des Körpers kann der Standfuß 3 ausgedreht werden. Am Standfuß 3 können ebenfalls Saugnäpfe 2 oder dergleichen vorgesehen werden.

Gerade wenn die erfindungsgemäße Vorrichtung zum Beispiel beim Schleppen eines Fahrzeuges eingesetzt werden soll, ist ein guter und sicherer Stand äußerst wichtig. Dies wird durch die vorstehende Ausgestaltung erreicht.

Es ist in diesem Zusammenhang auch denkbar, daß anstatt eines drehbaren Standfußes 3 ein oder mehrere nicht dargestellte ausziehbare oder ausklappbare Standfüße vorgesehen sind, die dieselbe Aufgabe erfüllen.

Innerhalb des Körpers 1 sind mehrere, im vorliegenden Ausführungsbeispiel sechs verschiedene Tafeln 4 angeordnet, auf denen Botschaften 5 angebracht sind.

Die Botschaften 5 können dabei ein- oder beidseitig auf den Tafeln 4 angebracht sein. Es ist sogar denkbar, daß unterschiedliche Botschaften 5 auf den beiden Seiten der Tafeln 4 vorgesehen sein können.

Um eine bessere Lesbarkeit der Botschaften 5 gerade bei Dämmerung und Dunkelheit zu gewährleisten, sind im vorliegenden Ausführungsbeispiel die Tafeln 4 reflektierend ausgerüstet. Die Schrift der Botschaften 5 hingegen ist nichtreflektierend ausgeführt, wodurch sich diese sehr gut von den reflektierenden Tafeln abheben und gut lesbar sind. Durch die vergleichsweise große Fläche der Tafeln 4 im Vergleich zu den Schriftzeichen der Botschaften 5 ist die Gesamtreflexion groß und die Tafeln auffallend.

Es ist aber dennoch auch eine hierzu inverse Ausgestaltung denkbar, bei der die Schriftzeichen der Botschaften 5 reflektierend ausgeführt sind und die Tafeln 4 nicht reflektierend.

In diesem Zusammenhang ist es auch denkbar, daß anstatt oder zusätzlich zur reflektierenden Ausführung eine lumineszierende Ausführung vorgesehen ist.

Die einzelnen Tafeln 4 sind an einer Drehachse 6 gelagert, die im Bereich eines Längsendes des Körpers 1 angeordnet ist.

Um diese Drehachse 6 können die Tafeln 4 geschwenkt werden. Im Körper 1 liegende Tafeln 4 werden dadurch ausgeklappt und damit lesbar.

Die Tafeln 4 können durch eine zusätzliche Arretierung im Körper 1 gehalten werden, so daß ein versehentliches Ausklappen verhindert wird.

Alternativ kann auch ein Schiebemechanismus vorgesehen sein, der es ermöglicht, die einzelnen Tafeln 4 aus dem Körper 1 herauszuschieben und so die jeweilige Botschaft 5 sichtbar zu machen.

Zusätzlich kann ein separater Halter 7 vorgesehen sein, der das freie Ende der jeweils ausgeklappten bzw. ausgeschobenen Tafel 4 zu befestigen vermag. An diesem Halter 7 kann beispielsweise ein weiterer Saugnapf 3 vorgesehen sein, mit dem der Halter 7 auf einem Untergrund befestigbar ist.

Dies sorgt dafür, daß gerade beim Schleppen und aufgesetzter erfindungsgemäßer Vorrichtung auf einem Kraftfahrzeug sichergestellt wird, daß die Tafel 4 nicht verbiegt oder gar beschädigt wird.

Der Halter 7 kann lose vorgesehen, oder ausklappbar oder ausziehbar mit dem Körper 1 verbunden sein.

Auf den Tafeln können beispielsweise folgende Botschaften 5 angebracht sein:
"Brauche Hilfe", "Hilfe kommt", "Werde geschleppt", "Brauche Benzin" und/oder "Brauche Diesel".

Weitere Botschaften sind denkbar.

Ebenso ist es denkbar, daß einzelne oder alle Tafeln auswechselbar ausgebildet sind. Hierzu kann beispielsweise die Drehachse 6 lösbar ausgeführt sein.

Desweiteren kann eine Tasche, ein Koffer oder ein anderes Transportbehältnis für die erfindungsgemäße Vorrichtung vorgesehen sein.

Dies schützt die Vorrichtung beispielsweise vor Beschädigungen beim Transport.

Es ist auch denkbar, daß die Vorrichtung beleuchtbar ausgeführt ist, wodurch ein zusätzlicher Sicherheitsgewinn erzielt werden kann.

Durch die erfindungsgemäße Vorrichtung braucht nicht mehr länger direkt am Auto auf Hilfe gewartet werden. Vielmehr können sich die Insassen in geringer Entfernung sicher aufhalten.

Zudem wird verhindert, daß Dritte zu Hilfe kommen, obwohl schon Hilfe unterwegs ist und sich dadurch in Gefahr begeben.

Die Verwendung einzelner Tafeln ist denkbar. Diese können mit Befestigungseinrichtungen ausgerüstet sein.

## Patentansprüche

1. Sicherheitsvorrichtung insbesondere für Fahrzeuge, **dadurch gekennzeichnet, daß** eine Einrichtung zum Signalisieren von Botschaften (5) an Dritte vorgesehen ist.

2. Sicherheitsvorrichtung nach Anspruch 1, **dadurch gekennzeichnet, daß** wenigstens eine Tafel mit wenigstens einer Botschaft (5) vorgesehen ist, wobei die Einrichtung mehrere vorgegebene Botschaften (5) enthalten kann.

3. Vorrichtung nach Anspruch 1 oder 2, **dadurch gekennzeichnet, daß** ein im wesentlichen U-förmiger Körper (1) vorgesehen ist, in dem mehrere Tafeln (4) mit unterschiedlichen Botschaften (5) angeordnet sind, wobei ein Drehgelenk (6) oder eine Schiebeführung vorgesehen ist.

4. Vorrichtung nach Anspruch 2 oder 3, **dadurch gekennzeichnet, daß** die Tafeln (4) ein- oder beidseitig mit Botschaften (5) beschriftet sind und/oder daß die Tafeln (4) reflektierend ausgebildet sind und/oder daß die Botschaften (5) als reflektierende oder nicht reflektierende Buchstaben auf den Tafeln (4) angeordnet sind.

5. Vorrichtung nach einem der vorangehenden Ansprüche, **dadurch gekennzeichnet, daß** am Körper (1) oder an den Tafeln (4), vorzugsweise an der Unterseite, ein oder mehrere Saugfüße (2) angeordnet sind.

6. Vorrichtung nach einem der vorangehenden Ansprüche, **dadurch gekennzeichnet, daß** am Körper (1) oder an den Tafeln (4), vorzugsweise an der Unterseite, ein oder mehrere Magneten angeordnet sind.

7. Vorrichtung nach einem der vorangehenden Ansprüche, **dadurch gekennzeichnet, daß** am Körper (1) oder an den Tafeln (4), vorzugsweise an der Unterseite, ein oder mehrere Standfüße (3) angeordnet sind.

8. Vorrichtung nach Anspruch 7, **dadurch gekennzeichnet, daß** wenigstens ein Teil der Standfüße (3) einklappbar oder einschwenkbar ausgebildet sind.

9. Vorrichtung nach einem der vorangehenden Ansprüche, **dadurch gekennzeichnet, daß** Saugnäpfe (2), Magneten und Standfüße (3) miteinander kombiniert vorgesehen sind.

10. Vorrichtung nach einem der vorangehenden Ansprüche, **dadurch gekennzeichnet, daß** wenigstens ein Teil der Tafeln (4) auswechselbar im Körper (1) befestigt sind, wobei eine Sperre vorgesehen sein kann, die ein Verlieren der Tafeln (4) verhindert.

11. Vorrichtung nach einem der vorangehenden Ansprüche, **dadurch gekennzeichnet, daß** die Breite des Körpers (1) auf die Anzahl der aufzunehmenden Tafeln (4) und deren Dicke abgestimmt ist.

12. Vorrichtung nach einem der vorangehenden Ansprüche, **dadurch gekennzeichnet, daß** die Tafeln (4) hinreichend steif ausgebildet sind.

13. Vorrichtung nach einem der vorangehenden Ansprüche, **dadurch gekennzeichnet, daß** ein Halter (7) oder eine Aufnahme vorgesehen ist, welcher die ausgeklappten bzw. ausgeschobenen Tafeln (4) auf einem Untergrund zu befestigen vermag, wobei der Halter (7) bzw. die Aufnahme von der Vorrichtung ausklappbar oder ausziehbar ausgebildet sein kann.

14. Vorrichtung nach einem der vorangehenden Ansprüche, **dadurch gekennzeichnet, daß** die Tafeln (4) zumindest die Botschaften "Brauche Hilfe", "Hilfe kommt" und/oder "Werde geschleppt" enthalten, wobei die Tafeln (4) zusätzlich die Botschaften "Brauche Benzin" und/oder "Brauche Diesel" enthalten können und.

15. Vorrichtung nach Anspruch 14, **dadurch gekennzeichnet, daß** weitere Botschaften (5) vorgesehen sind.
